(19) Europäisches Patentamt
European Patent Office
Office européen des brevets

(11) **EP 4 362 132 A1**

(12) **EUROPEAN PATENT APPLICATION**
published in accordance with Art. 153(4) EPC

(43) Date of publication:
**01.05.2024 Bulletin 2024/18**

(51) International Patent Classification (IPC):
**H01M 4/139** (2010.01)      **H01G 11/50** (2013.01)
**H01G 11/86** (2013.01)

(21) Application number: **22827983.2**

(22) Date of filing: **22.03.2022**

(52) Cooperative Patent Classification (CPC):
**H01G 11/50; H01G 11/86; H01M 4/139;**
Y02E 60/10

(86) International application number:
**PCT/JP2022/013066**

(87) International publication number:
**WO 2022/270063 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.06.2021 JP 2021104884**

(71) Applicant: **Musashi Energy Solutions Co., Ltd.
Hokuto-shi, Yamanashi 409-1501 (JP)**

(72) Inventors:
• **AONO, Shintaro
  Hokuto-shi, Yamanashi 409-1501 (JP)**
• **AITA, Kazunari
  Hokuto-shi, Yamanashi 409-1501 (JP)**

(74) Representative: **TBK
Bavariaring 4-6
80336 München (DE)**

(54) **METHOD FOR MANUFACTURING DOPED ELECTRODE**

(57) A method for manufacturing a doped electrode including an active material layer doped with an alkali metal is provided. A strip-shaped electrode including an active material layer is conveyed along a path that passes through a doping tank storing a dope solution containing ions of the alkali metal and an aprotic organic solvent, and a counter electrode unit. In the doping tank, the counter electrode unit and the strip-shaped electrode including the active material layer are electrically connected via the dope solution. A content of dimethyl carbonate in the aprotic organic solvent is 40 vol% or more and 95 vol% or less.

FIG. 3

## Description

CROSS-REFERENCE TO RELATED APPLICATION

This international application claims the benefit of Japanese Patent Application No. 2021-104884, filed on June 24, 2021 in the Japan Patent Office, and the entire disclosure of Japanese Patent Application No. 2021-104884 is incorporated herein by reference.

TECHNICAL FIELD

The present disclosure relates to a method for manufacturing a doped electrode.

BACKGROUND ART

In recent years, downsizing and weight reduction of electronic devices have been remarkable, which further increases a demand for downsizing and weight reduction also of batteries used as drive power supplies for the electronic devices.

To satisfy such a demand for downsizing and weight reduction, nonaqueous electrolyte rechargeable batteries, typified by a lithium-ion rechargeable battery, have been developed. As a power storage device applicable to a use that requires high energy density characteristics and high output characteristics, a lithium ion capacitor is known. In addition, a sodium ion battery and a sodium ion capacitor, using sodium that is lower in cost and is a richer resource than lithium, are also known.

A process of doping an electrode with an alkali metal in advance (generally called pre-doping) is adopted in these batteries and capacitors for various purposes. An example of a method for pre-doping an electrode with an alkali metal may be a continuous method. In the continuous method, the pre-doping is carried out while a strip-shaped electrode is conveyed through a dope solution. In the dope solution, the electrode faces an alkali metal electrode. The continuous method is disclosed in Patent Documents 1 to 4.

PRIOR ART DOCUMENTS

PATENT DOCUMENTS

Patent Document 1: Japanese Unexamined Patent Application Publication No. H10-308212
Patent Document 2: Japanese Unexamined Patent Application Publication No. 2008-77963
Patent Document 3: Japanese Unexamined Patent Application Publication No. 2012-49543
Patent Document 4: Japanese Unexamined Patent Application Publication No. 2012-49544

SUMMARY OF THE INVENTION

PROBLEMS TO BE SOLVED BY THE INVENTION

In a case where pre-doping is performed for a long time by using a dope solution having a conventional composition, by-products such as diethyl carbonate are likely to be generated in the dope solution. Generation of the by-products increases a resistance value of the dope solution. Generation of the by-products also makes uniform pre-doping difficult.

In one aspect of the present disclosure, it is desirable to provide a method for manufacturing a doped electrode which can reduce generation of by-products in a dope solution while pre-doping is performed.

MEANS FOR SOLVING THE PROBLEMS

One aspect of the present disclosure is a method for manufacturing a doped electrode including an active material layer doped with an alkali metal. In the method for manufacturing a doped electrode, a strip-shaped electrode including an active material layer is conveyed along a path that passes through a doping tank storing a dope solution containing ions of the alkali metal and an aprotic organic solvent and a counter electrode unit, and the counter electrode unit and the strip-shaped electrode including the active material layer are electrically connected via the dope solution in the doping tank. A content of dimethyl carbonate in the aprotic organic solvent is 40 vol% or more and 95 vol% or less.

According to the method for manufacturing a doped electrode which is one aspect of the present disclosure, generation of by-products in the dope solution while pre-doping is performed can be reduced.

BRIEF DESCRIPTION OF THE DRAWINGS

FIG. 1 is a plan view showing a configuration of an electrode.
FIG. 2 is a cross-sectional view taken along line II-II in FIG. 1.
FIG. 3 is an explanatory diagram showing a configuration of an electrode manufacturing system.
FIG. 4 is an explanatory diagram showing a configuration of a doping tank.
FIG. 5 provides a plan view and a cross-sectional view showing a configuration of a counter electrode unit.
FIG. 6 provides a plan view and a cross-sectional view showing a configuration and an arrangement of a reference electrode unit.

EXPLANATION OF REFERENCE NUMERALS

1...electrode, 1A...doped electrode, 3...current collector, 5...active material layer, 6...active material layer formed portion, 7...active material layer unformed portion, 11... electrode manufacturing system, 15...electrolyte solution treatment tank, 17, 19, 21...doping tank , 23A, 23B, 23C...cleaning tank, 25, 27, 29, 31, 33, 35, 37, 39, 40, 41, 43, 45, 46, 47, 49, 51, 52, 53, 55, 57, 58, 59, 61, 63, 64, 65, 67, 69, 70, 71, 73, 75, 77, 79, 81, 83, 85, 87, 89, 91, 93, 201, 203, 205, 207, 209, 211...conveyor roller, 101...supply roll, 103...winding roll, 105...supporting platform, 107...circulation filter unit, 109, 110, 111, 112, 113, 114...power source, 117...tab cleaner, 119...collection unit, 121...end portion sensor, 131...upstream tank, 133... downstream tank, 137, 139, 141, 143... counter electrode unit, 149, 151...space, 161...filter, 163...pump, 165...pipe, 213...blower, 401...frame, 403...bus bar, 407...copper plate, 409...lithium plate, 411...mask, 501...reference electrode unit, 503...tab lead, 505...reference lithium metal electrode, 507...space

MODE FOR CARRYING OUT THE INVENTION

Example embodiments of the present disclosure will be explained with reference to the drawings.

<First Embodiment>

1. Configuration of Electrode 1

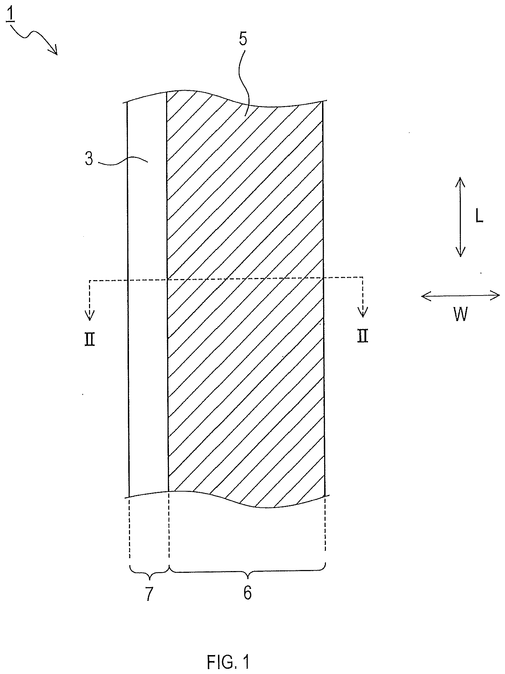

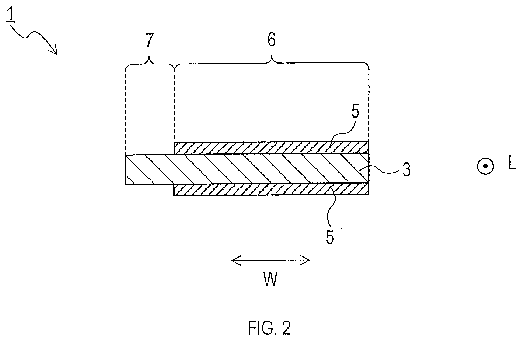

A configuration of an electrode 1 will be explained with reference to FIGS. 1 and 2. The electrode 1 has a strip-like shape. The electrode 1 includes a current collector 3 and an active material layer 5. The current collector 3 has a strip-like shape. The active material layer 5 is formed on both sides of the current collector 3.

The electrode 1 includes an active material layer formed portion 6 and an active material layer unformed portion 7 on its surface. The active material layer formed portion 6 is a portion where the active material layer 5 is formed. The active material layer unformed portion 7 is a portion where the active material layer 5 is not formed. The current collector 3 is exposed in the active material layer unformed portion 7.

The active material layer unformed portion 7 is in the form of a strip that extends in a longitudinal direction L of the electrode 1. The active material layer unformed portion 7 is located at an end portion of the electrode 1 in a width direction W of the electrode 1.

The current collector 3 is preferably made of a metal foil such as of copper, nickel, and stainless steel. The current collector 3 may be prepared by forming a conductive layer, the main component of which is a carbon material, on a metal foil. The current collector 3 has a thickness of, for example, 5 to 50 $\mu$m.

The active material layer 5 can be produced, for example, by applying a slurry on the current collector 3 and drying the slurry. The slurry contains an active material, a binder, and the like.

Examples of the binder may include rubber-based binders such as styrenebutadiene rubber (SBR), and NBR; fluorine-based resin such as polytetrafluoroethylene and polyvinylidene fluoride; polypropylene, polyethylene, fluorine modified (meth) acrylic binder as disclosed in Japanese Unexamined Patent Application Publication No. 2009-246137.

The slurry may include other components in addition to the active material and the binder. Examples of the other components may include a conductive agent and a thickener. Examples of the conductive agent may include carbon black, graphite, vapor-grown carbon fiber and metal powder. Examples of the thickener may include carboxyl methyl cellulose, sodium salt or ammonium salt thereof, methyl cellulose, hydroxymethyl cellulose, ethyl cellulose, hydroxypropyl cellulose, polyvinyl alcohol, oxidized starch, phosphorylated starch and casein.

The thickness of the active material layer 5 is not particularly limited. The thickness of the active material layer 5 is, for example, 5 to 500 $\mu$m, preferably 10 to 200 $\mu$m, and particularly preferably 10 to 100 $\mu$m. The active material included in the active material layer 5 is not particularly limited as long as it is an electrode active material applicable to a battery or a capacitor that uses insertion/desorption of alkali metal ions. The active material may be a negative electrode active material or a positive electrode active material.

The negative electrode active material is not particularly limited. Examples of the negative electrode active material may include a carbon material such as a composite carbon material, and metal or semimetal, such as Si and Sn, that can be alloyed with lithium or a material that includes oxides of these metal or semimetal. Examples of the composite carbon material may include graphite, easily-graphitizable carbon, hardly-graphitizable carbon, and a composite carbon material made by coating graphite particles with carbides of pitch and resin. Specific examples of the carbon material may include a carbon material disclosed in Japanese Unexamined Patent Application Publication No. 2013-258392. Specific examples of the metal or semimetal that can be alloyed with lithium or the material that includes oxides of these metal or semimetal may include materials disclosed in Japanese Unexamined Patent Application Publication No. 2005-123175 and Japanese Unexamined Patent Application Publication No. 2006-107795.

Examples of the positive electrode active material may include transition metal oxides and sulfur-based active materials. Examples of the transition metal oxides may include cobalt oxide, nickel oxide, manganese oxide, and vanadium oxide. Examples of the sulfur-based active materials may include elemental sulfur and metal sulfides. Both the positive-electrode active material and the negative electrode active material may be made from a single substance or made by mixing two or more substances.

An electrode manufacturing system 11, which will be described later, is used to pre-dope the active material included in the active material layer 5 with the alkali metal. The alkali metal for pre-doping the active material is preferably lithium or sodium, and lithium is particularly preferable. In a case where the electrode 1 is used to manufacture a lithium-ion rechargeable battery, a density of the active material layer 5 is preferably 1.30 to 2.00 g/cc, and particularly preferably 1.40 to 1.90 g/cc.

2. Configuration of Electrode Manufacturing System 11

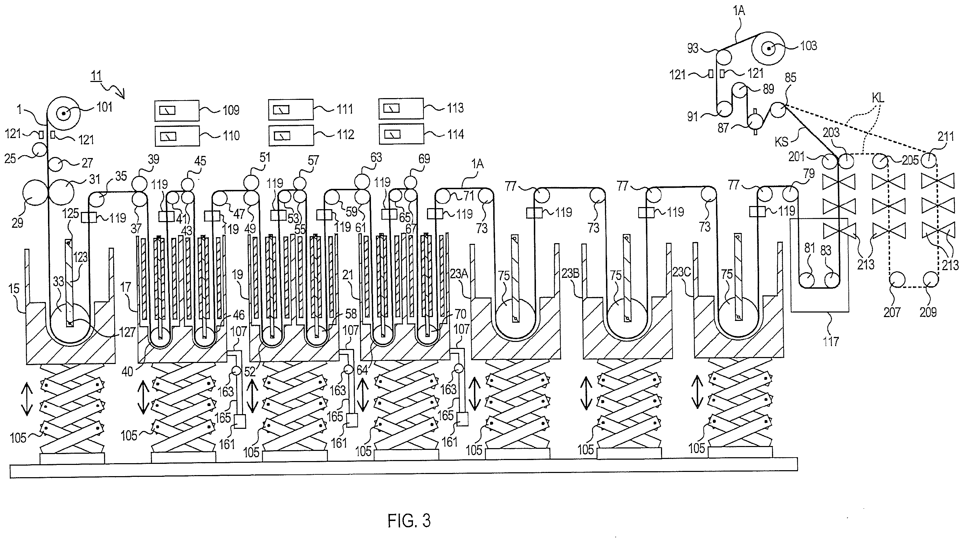

A configuration of an electrode manufacturing system 11 will be explained with reference to FIGS. 3 to 5. As shown in FIG. 3, the electrode manufacturing system 11 comprises an electrolyte solution treatment tank 15, doping tanks 17, 19, 21, cleaning tanks 23A, 23B, 23C, conveyor rollers 25, 27, 29, 31, 33, 35, 37, 39, 40, 41, 43, 45, 46, 47, 49, 51, 52, 53, 55, 57, 58, 59, 61, 63, 64, 65, 67, 69, 70, 71, 73, 75, 77, 79, 81, 83, 85, 87, 89, 91, 93, 201, 203, 205, 207, 209, 211 (hereinafter, these conveyor rollers may be collectively referred to as a group of conveyor rollers), a supply roll 101, a winding roll 103, supporting platforms 105, circulation filter units 107, six power sources 109, 110, 111, 112, 113, 114, a tab cleaner 117, collection units 119, end portion sensors 121, and blowers 213.

The electrolyte solution treatment tank 15 is a square tank with an open top. A bottom surface of the electrolyte solution treatment tank 15 has a substantially U-shaped cross section. The electrolyte solution treatment tank 15 includes a partition plate 123. The partition plate 123 is supported by a supporting rod 125 that passes through an upper end of the partition plate 123. The supporting rod 125 is fixed on a wall or the like which is not shown in the drawings. The partition plate 123 extends in a vertical direction and divides an interior of the electrolyte solution treatment tank 15 into two spaces.

The conveyor roller 33 is attached to a lower end of the partition plate 123. The partition plate 123 and the conveyor roller 33 are supported by a supporting rod 127 that passes through the partition plate 123 and the conveyor roller 33. The partition plate 123 is cut off near the lower end so that the partition plate 123 does not interfere with the conveyor roller 33. There is a space between the conveyor roller 33 and the bottom surface of the electrolyte solution treatment tank 15.

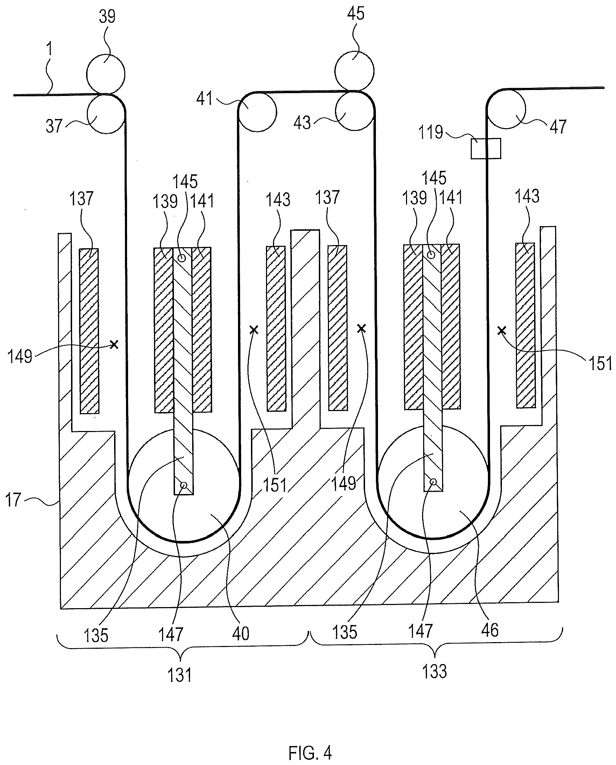

A configuration of the doping tank 17 will be explained with reference to FIG. 4. The doping tank 17 includes an upstream tank 131 and a downstream tank 133. The upstream tank 131 is disposed on a side close to the supply roll 101 (hereinafter, referred to as an upstream side), and the downstream tank 133 is disposed on a side close to the winding roll 103 (hereinafter, referred to as a downstream side).

Firstly, a configuration of the upstream tank 131 will be explained. The upstream tank 131 is a square tank with an open top. A bottom surface of the upstream tank 131 has a substantially U-shaped cross section. The upstream tank 131 includes a partition plate 135 and four counter electrode units 137, 139, 141, 143.

The partition plate 135 is supported by a supporting rod 145 that passes through an upper end of the partition plate 135. The supporting rod 145 is fixed on a wall or the like which is not shown in the drawings. The partition plate 135 extends in a vertical direction and divides an interior of the upstream tank 131 into two spaces. A conveyor roller 40 is attached to a lower end of the partition plate 135. The partition plate 135 and the conveyor roller 40 are supported by a supporting rod 147 that passes through the partition plate 135 and the conveyor roller 40. The partition plate 135 is cut off near the lower end so that the partition plate 135 does not interfere with the conveyor roller 40. There is a space between the conveyor roller 40 and the bottom surface of the upstream tank 131.

The counter electrode unit 137 is disposed on the upstream side in the upstream tank 131. The counter electrode units 139, 141 are disposed to sandwich the partition plate 135 from both sides. The counter electrode unit 143 is disposed on the downstream side in the upstream tank 131.

There is a space 149 between the counter electrode unit 137 and the counter electrode unit 139. There is a space 151 between the counter electrode unit 141 and the counter electrode unit 143. The counter electrode units 137, 139, 141, 143 are coupled to one electrode of the power source 109.

Each of the counter electrode units 137, 139, 141, 143 may be coupled to a different power source. In this case, the counter electrode unit 137, 139, 141, 143 can be controlled separately. In addition, depending on a doped state of the electrode 1 in the doping process, electrical adjustment of the counter electrode units 137, 139, 141, 143 becomes easy. As a result, a desired doped electrode 1A becomes easy to manufacture. The doped electrode 1A is the electrode 1 that includes the active material layer 5 doped with the alkali metal.

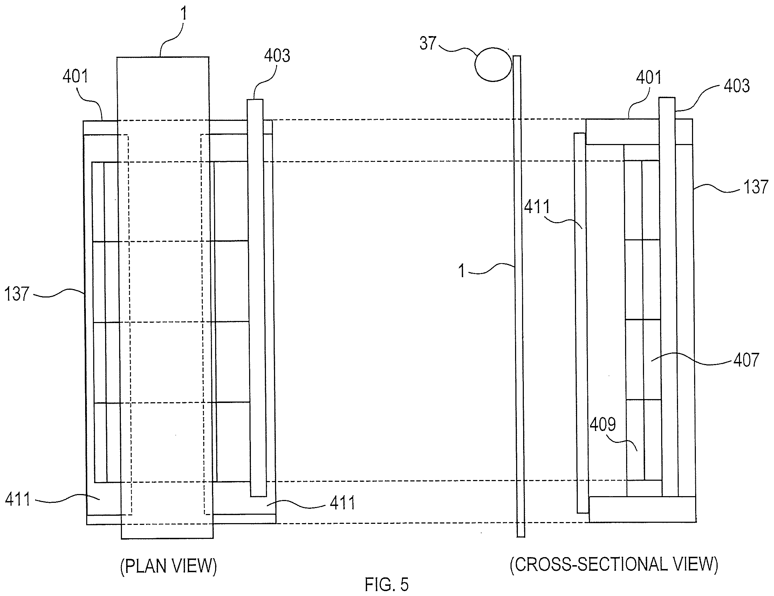

Configurations of the counter electrode units 137, 139, 141, 143 are similar to each other. Here, the configuration of the counter electrode unit 137 will be explained with reference to FIG. 5.

The counter electrode unit 137 include a frame 401, a bus bar 403, a copper plate 407, a lithium plate 409, and a mask 411. The frame 401 is a box-like member that is open on a side facing the electrode 1. The frame 401 is made from polypropylene. The bus bar 403 is an electrically conductive member. Materials of the bus bar 403 may be, for example, copper, nickel, titanium, and the like. A large part of the bus bar 403 is stored in the frame 401. One end of the bus bar 403 protrudes from the frame 401. The bus bar 403 is electrically connected to a power source.

The copper plate 407 and the lithium plate 409 are stored in the frame 401. The lithium plate 409 is electrically connected to the power source via the copper plate 407 and the bus bar 403. As shown in the plan view of FIG. 5, the mask 411 exposes a part of the lithium plate 409 that faces the active material layer formed portion 6 of the electrode 1, and covers a part of the lithium plate 409 that faces the active material layer unformed portion 7. The mask 411 inhibits the lithium from precipitating on the active material layer unformed portion 7 during the pre-doping. Therefore, it becomes easy to manufacture a power storage device by using the doped electrode 1A.

The downstream tank 133 has a configuration basically similar to that of the upstream tank 131. However, the downstream tank 133 includes the conveyor roller 46 therein instead of the conveyor roller 40. The counter electrode units 137, 139, 141, 143 in the downstream tank 133 are coupled to one electrode of the power source 110.

The doping tank 19 has a configuration basically similar to that of the doping tank 17. However, the doping tank 19 includes the conveyor rollers 52, 58 therein instead of the conveyor rollers 40, 46. The counter electrode units 137, 139, 141, 143 in the upstream tank 131 of the doping tank 19 are coupled to one electrode of the power source 111. The counter electrode units 137, 139, 141, 143 in the downstream tank 133 of the doping tank 19 are coupled to one electrode of the power source 112.

The doping tank 21 has a configuration basically similar to that of the doping tank 17. However, the doping tank 21 includes the conveyor rollers 64, 70 therein instead of the conveyor rollers 40, 46. The counter electrode units 137, 139, 141, 143 in the upstream tank 131 of the doping tank 21 are coupled to one electrode of the power source 113. The counter electrode units 137, 139, 141, 143 in the downstream tank 133 of the doping tank 21 are coupled to one electrode of the power source 114.

Each of the cleaning tanks 23A, 23B, 23C has a configuration basically similar to that of the electrolyte solution treatment tank 15. However, the cleaning tanks 23A, 23B, 23C include the conveyor roller 75 therein instead of the conveyor roller 33.

A dope solution taken out from the doping tank 21 adheres to the electrode 1 that has passed through the doping tank 21. The dope solution that has adhered to the electrode 1 is efficiently removed in the cleaning tanks 23A, 23B, 23C. Therefore, the electrode 1 can be easily handled in the next step.

A cleaning solution below, for example, is stored in the cleaning tanks 23A, 23B, 23C. The cleaning solution is preferably an organic solvent, and preferably contains an aprotic solvent having a boiling point of 150°C or less at one atmospheric pressure. Examples of the aprotic solvent having a boiling point of 150°C or less at one atmospheric pressure include at least one kind selected from a carbonate-based solvent, an ester-based solvent, an ether-based solvent, a hydrocarbon-based solvent, a ketone-based solvent, and a nitrile-based solvent. Among them, the carbonate-based solvent is preferable. At least one kind selected from dimethyl carbonate, diethyl carbonate, methyl propyl carbonate and ethyl methyl carbonate is particularly preferable as the carbonate-based solvent. Use of the cleaning solution as such facilitates removal of the cleaning solution from the cleaned electrode 1.

In the cleaning tanks 23A, 23B, 23C, the dope solution taken from the doping tank 21 is accumulated. Therefore, it is preferable to maintain a certain quality of the cleaning solution, such as by adding or replacing the cleaning solution. An example method for grasping the quality of the cleaning solution may be to install sensors such as an insulation resistance tester and a conductivity meter in the cleaning tanks 23A, 23B, 23C and regularly check values measured by these sensors.

Among the group of conveyor rollers, the conveyor rollers 37, 39, 43, 45, 49, 51, 55, 57, 61, 63, 67, 69 are made from an electrically conductive material. The conveyor rollers 37, 39, 43, 45, 49, 51, 55, 57, 61, 63, 67, 69 correspond to electrically conductive electric power supply rollers. Examples of the electrically conductive material may include stainless steel, gold, copper, and rhodium. Copper is particularly preferable as the electrically conductive material. The electrically conductive material may be made by mixing two or more materials. Presence of the electrically conductive material particularly on surfaces of the electric power supply rollers helps inhibit reaction between the doped electrode 1A and the electric power supply rollers. As a result, the high quality doped electrode 1A can be mass-produced.

Among the group of conveyor rollers, the conveyor rollers other than the electrically conductive electric power supply rollers are made of elastomer except for their bearing portion. The group of conveyor rollers convey the electrode 1 along a certain path. The path along which the group of conveyor rollers convey the electrode 1 includes a carrying-out-cleaning path and an omitting-cleaning path. The carrying-out-cleaning path is a path that starts from the supply roll 101, passes through the electrolyte solution treatment tank 15, the doping tank 17, the doping tank 19, the doping tank 21, at least one of the cleaning tanks 23A, 23B, 23C, and the tab cleaner 117 in this order, and ends at the winding roll 103. In the carrying-out-cleaning path, the number of the cleaning tanks through which the doped electrode 1A passes can be selected from one to three as desired.

The omitting-cleaning path is basically similar to the carrying-out-cleaning path, but does not pass through the cleaning tanks 23A, 23B, 23C after passing through the doping tank 21, and proceeds to the tab cleaner 117.

Both the carrying-out-cleaning path and the omitting-cleaning path include two kinds of paths after passing through the tab cleaner 117. One is a path through which the electrode 1, after passing through the tab cleaner 117, is conveyed by the conveyor rollers 201, 203, 205, 207, 209, 211 and then conveyed by the conveyor rollers 85, 87, 89, 91, 93 (hereinafter, referred to as a long-distance drying path KL).

The other is a path through which the electrode 1 is conveyed by the conveyor rollers 201, 203 after passing through the tab cleaner 117, and then conveyed by the conveyor rollers 85, 87, 89, 91, 93 (hereinafter, referred to as a short-distance drying path KS).

Of the path through which the group of conveyor rollers convey the electrode 1, a part of the path that passes through the electrolyte solution treatment tank 15 is a path that is first directed downward by the conveyor rollers 29, 31, and then directed upward by the conveyor roller 33.

Of the path through which the group of conveyor rollers convey the electrode 1, a part of the path that passes through the doping tank 17 is as follows. First, the path is directed downward by the conveyor roller 37, and runs downward in the space 149 of the upstream tank 131. Then, the path is directed upward by the conveyor roller 40, and runs upward in the space 151 of the upstream tank 131. Then, the path is directed downward by the conveyor rollers 41, 43, and runs downward in the space 149 of the downstream tank 133. Then, the path is directed upward by the conveyor roller 46, and runs upward in the space 151 of the downstream tank 133. Finally, the path is directed horizontally by the conveyor roller 47, and runs toward the doping tank 19.

Of the path through which the group of conveyor rollers convey the electrode 1, a part of the path that passes through the doping tank 19 is as follows. First, the path is directed downward by the conveyor roller 49, and runs downward in the space 149 of the upstream tank 131. Then, the path is directed upward by the conveyor roller 52, and runs upward in the space 151 of the upstream tank 131. Then, the path is directed downward by the conveyor rollers 53, 55, and runs downward in the space 149 of the downstream tank 133. Then, the path is directed upward by the conveyor roller 58, and runs upward in the space 151 of the downstream tank 133. Finally, the path is directed horizontally by the conveyor roller 59, and runs toward the doping tank 21.

Of the path through which the group of conveyor rollers convey the electrode 1, a part of the path that passes through the doping tank 21 is as follows. First, the path is directed downward by the conveyor roller 61, and runs downward in the space 149 of the upstream tank 131. Then, the path is directed upward by the conveyor roller 64, and runs upward in the space 151 of the upstream tank 131. Then, the path is directed downward by the conveyor rollers 65, 67, and runs downward in the space 149 of the downstream tank 133. Then, the path is directed upward by the conveyor roller 70, and runs upward in the space 151 of the downstream tank 133. Finally, the path is directed horizontally by the conveyor roller 71, and runs toward the cleaning tank 23.

Of the carrying-out-cleaning path, a part of the path that passes through the cleaning tanks 23A, 23B, 23C is first directed downward by the conveyor roller 73, and then directed upward by the conveyor roller 75.

The electrode 1 is wound around the supply roll 101. In other words, the supply roll 101 holds the electrode 1 in a wound state. The active material in the electrode 1 held by the supply roll 101 is not yet doped with the alkali metal.

The group of conveyor rollers draw and convey the electrode 1 held by the supply roll 101. The winding roll 103 winds up and stores the electrode 1 conveyed by the group of conveyor rollers. When the electrode 1 is conveyed along the path that passes through the doping tanks 17, 19, 21, the active material layer 5 is doped with the alkali metal. The method of doping with the alkali metal is a method of electrically doping the active material with the alkali metal in the doping tanks 17, 19, 21 by using the counter electrode units 137, 139, 141, 143 provided to face the electrode 1. Doping the active material layer 5 with the alkali metal makes the electrode 1 the doped electrode 1A that includes the active material layer 5 doped with the alkali metal. The electrode 1 stored in the winding roll 103 is the doped electrode 1A.

The supporting platforms 105 support the electrolyte solution treatment tank 15, the doping tanks 17, 19, 21, and the cleaning tanks 23A, 23B, 23C from below. The supporting platforms 105 can change their height. Each of the doping tanks 17, 19, 21 has the circulation filter unit 107. The circulation filter unit 107 includes a filter 161, a pump 163, and a pipe 165.

In the circulation filter unit 107 disposed in the doping tank 17, the pipe 165 is a circulation pipe that exits the doping tank 17, passes through the pump 163 and the filter 161 in this order, and returns to the doping tank 17. The dope solution in the doping tank 17 circulates through the pipe 165 and the filter 161 by a driving force of the pump 163, and returns to the doping tank 17. At this time, foreign matters in the dope solution are filtered by the filter 161. Such foreign matters include those precipitated from the dope solution and those generated from the electrode 1. A material for the filter 161 is a resin such as polypropylene and polytetrafluoroethylene. A pore size of the filter 161 can be appropriately determined. The pore size of the filter 161 is, for example, 0.2 $\mu$m or more and 50 $\mu$m or less.

The circulation filter units 107 disposed in the doping tanks 19, 21 have a similar configuration and a similar effect. In FIGS. 3 and 4, the dope solution is not illustrated for the purpose of convenience.

One terminal of the power source 109 is coupled to the conveyor rollers 37, 39. The other terminal of the power source 109 is coupled to the counter electrode units 137, 139, 141, 143 disposed in the upstream tank 131 of the doping tank 17. The electrode 1 contacts the conveyor rollers 37, 39. The electrode 1 and the counter electrode units 137, 139, 141, 143 are submerged in the dope solution, which is an electrolyte solution. Accordingly, in the upstream tank 131 of the doping tank 17, the electrode 1 is electrically connected to the counter electrode units 137, 139, 141, 143 via the electrolyte solution.

One terminal of the power source 110 is coupled to the conveyor rollers 43, 45. The other terminal of the power source 110 is coupled to the counter electrode units 137, 139, 141, 143 disposed in the downstream tank 133 of the doping tank 17. The electrode 1 contacts the conveyor rollers 43, 45. The electrode 1 and the counter electrode units 137, 139, 141, 143 are submerged in the dope solution, which is an electrolyte solution. Accordingly, in the downstream tank 133 of the doping tank 17, the electrode 1 is electrically connected to the counter electrode units 137, 139, 141, 143 via the electrolyte solution.

One terminal of the power source 111 is coupled to the conveyor rollers 49, 51. The other terminal of the power source 111 is coupled to the counter electrode units 137, 139, 141, 143 disposed in the upstream tank 131 of the doping tank 19. The electrode 1 contacts the conveyor rollers 49, 51. The electrode 1 and the counter electrode units 137, 139, 141, 143 are submerged in the dope solution, which is an electrolyte solution. Accordingly, in the upstream tank 131 of the doping tank 19, the electrode 1 is electrically connected to the counter electrode units 137, 139, 141, 143 via the electrolyte solution.

One terminal of the power source 112 is coupled to the conveyor rollers 55, 57. The other terminal of the power source 112 is coupled to the counter electrode units 137, 139, 141, 143 disposed in the downstream tank 133 of the doping tank 19. The electrode 1 contacts the conveyor rollers 55, 57. The electrode 1 and the counter electrode units 137, 139, 141, 143 are submerged in the dope solution, which is an electrolyte solution. Accordingly, in the downstream tank 133 of the doping tank 19, the electrode 1 is electrically connected to the counter electrode units 137, 139, 141, 143 via the electrolyte solution.

One terminal of the power source 113 is coupled to the conveyor rollers 61, 63. The other terminal of the power source 113 is coupled to the counter electrode units 137, 139, 141, 143 disposed in the upstream tank 131 of the doping tank 21. The electrode 1 contacts the conveyor rollers 61, 63. The electrode 1 and the counter electrode units 137, 139, 141, 143 are submerged in the dope solution, which is an electrolyte solution. Accordingly, in the upstream tank 131 of the doping tank 2, the electrode 1 is electrically connected to the counter electrode units 137, 139, 141, 143 via the electrolyte solution.

One terminal of the power source 114 is coupled to the conveyor rollers 67, 69. The other terminal of the power source 114 is coupled to the counter electrode units 137, 139, 141, 143 disposed in the downstream tank 133 of the doping tank 21. The electrode 1 contacts the conveyor rollers 67, 69. The electrode 1 and the counter electrode units 137, 139, 141, 143 are submerged in the dope solution, which is an electrolyte solution. Accordingly, in the downstream tank 133 of the doping tank 21, the electrode 1 is electrically connected to the counter electrode units 137, 139, 141, 143 via the electrolyte solution.

The tab cleaner 117 cleans the active material layer unformed portion 7 of the doped electrode 1A. If a residual organic component derived from the dope solution or the like remains in the active material layer unformed portion 7 of the doped electrode 1A, a welding defect is likely to occur when the active material layer unformed portion 7 is welded.

An amount of the residual organic component on the active material layer unformed portion 7 can be measured after the cleaning by the tab cleaner 117. Examples of the measurement method may include attenuated total reflection-Fourier transform infrared spectrophotometer. The characteristic peak of the residual organic component is in a range of wavenumbers from $1180\ cm^{-1}$ to $1250\ cm^{-1}$. Accordingly, the amount of the residual organic component can be measured based on an absorbance peak area value in this range.

After the cleaning by the tab cleaner 117, quality of the doped electrode 1A can be evaluated based on the amount of the residual organic component on the active material layer unformed portion 7. The quality of the doped electrode 1A can be evaluated, for example, based on whether the absorbance peak area value in the range of wavenumbers from $1180\ cm^{-1}$ to $1250\ cm^{-1}$ is 0.1 or less. If the absorbance peak area value is 0.1 or less, it can be determined that the active material layer unformed portion 7 is sufficiently cleaned.

The collection unit 119 is disposed in each of the electrolyte solution treatment tank 15, the doping tanks 17, 19, 21, and the cleaning tanks 23A, 23B, 23C. The collection unit 119 collects the solution the electrode 1 taken out from the tank and returns the collected solution back into the tank.

The end portion sensors 121 detect the position of an end portion in the width direction W of the electrode 1. An end portion position adjustment unit, which is not shown in the drawings, adjusts positions of the supply roll 101 and the winding roll 103 in the width direction W based on the results of detection by the end portion sensors 121.

There are a plurality of blowers 213. The plurality of blowers 213 are aligned along a path on which the doped electrode 1A is conveyed. Some of the blowers 213 spray a gas onto the doped electrode 1A being conveyed regardless of whether the path of the doped electrode 1A is the long-distance drying path KL or the short-distance drying path KS. Other blowers 213 spray a gas onto the doped electrode 1A being conveyed on the long-distance drying path KL. Accordingly, in a case where the path of the doped electrode 1A is the long-distance drying path KL, the gas is sprayed onto the doped electrode 1A for a longer time than in a case of the short-distance drying path KS.

The gas the blowers 213 spray is preferably a gas inert to the active material doped with the alkali metal. Examples of the gas may include helium gas, neon gas, argon gas, nitrogen gas, and dehumidified air removed of moisture. The gas may include a single component or may be a mixed gas including two or more kinds of components.

When the omitting-cleaning path is selected and the doped electrode 1A passes through the tab cleaner 117, the dope solution adheres to a surface of the doped electrode 1A. When the blowers 213 spray the gas onto the doped electrode 1A, a solvent of the dope solution evaporates. A component of the dope solution (hereinafter, referred to as a residual component) remains on the surface of the doped electrode 1A. The residual component is a residue of one or more components contained in the dope solution that adhere to the doped electrode 1A. Most of the residual component can be removed from the doped electrode 1A by cleaning the doped electrode 1A. Thus, a mass of the residual component is equal to a mass of a basis weight a of the solvent, which will be described later.

3. Composition of Dope Solution

When using the electrode manufacturing system 11, the dope solution is stored in the electrolyte solution treatment tank 15 and the doping tanks 17, 19, 21. The dope solution includes alkali metal ions and a solvent. The dope solution is an electrolyte solution.

Examples of the solvent may include an organic solvent. The organic solvent is preferably an aprotic organic solvent. The solvent includes, for example, only an aprotic organic solvent. Examples of the aprotic organic solvent may include dimethyl carbonate, diethyl carbonate, ethyl methyl carbonate, vinylene carbonate, vinyl ethylene carbonate, ethylene carbonate, fluoroethylene carbonate, propylene carbonate, butylene carbonate, dipropyl carbonate, γ-butyrolactone, sulfolane, diethylene glycol dimethyl ether (diglyme), diethylene glycol methyl ethyl ether, triethylene glycol dimethyl ether (triglyme), triethylene glycol butyl methyl ether, and tetraethylene glycol dimethyl ether (tetraglyme).

In a case where the solvent is the above aprotic organic solvent, the electrode 1 can be doped efficiently. By using the doped electrode 1A doped with the aprotic organic solvent, a rechargeable battery with high battery stability can be obtained.

An organic solvent that belongs to a particular group is preferable as the aprotic organic solvent. For example, the organic solvent that belongs to the particular group is preferably dimethyl carbonate, diethyl carbonate, ethyl methyl carbonate, vinylene carbonate, vinyl ethylene carbonate, ethylene carbonate, fluoroethylene carbonate, and propylene carbonate.

In a case where the solvent is the organic solvent that belongs to a particular group, the electrode 1 can be doped particularly efficiently. By using the doped electrode 1A doped with the organic solvent that belongs to the particular group, a rechargeable battery with particularly high battery stability can be obtained.

Ionic liquids such as quaternary imidazolium salt, quaternary pyridinium salt, quaternary pyrrolidinium salt, and quaternary piperidinium salt may also be used as the organic solvent. The organic solvent may be made of a single component or may be a mixed solvent including two or more kinds of components.

A content of dimethyl carbonate in the aprotic organic solvent is preferably 40 vol% or more and 95 vol% or less. If the content of dimethyl carbonate in the aprotic organic solvent is 40 vol% or more and 95 vol% or less, diethyl carbonate is difficult to generate in the dope solution even if the pre-doping is performed for a long time. Particularly, diethyl carbonate is difficult to generate in the dope solution even if the pre-doping is continuously performed in a condition where an electric potential of the electrode 1 based on a later-described reference lithium metal electrode 505 (hereinafter, referred to as an electric potential of the electrode 1) is 0 V or less.

The condition where the electric potential of the electrode 1 is continuously 0 V or less for a long time is a strong reducing atmosphere condition. The strong reducing atmosphere condition cannot occur in a typical power storage device. If the strong reducing atmosphere condition occurs in a typical power storage device, byproducts such as diethyl carbonate seem more likely to be generated.

Dimethyl carbonate is an organic solvent having a relatively low boiling point among the aforementioned organic solvents that belong to the particular group. Accordingly, if the content of dimethyl carbonate in the aprotic organic solvent is 40 vol% or more and 95 vol% or less, the mass of the dope solution that remains in the doped electrode 1A is easily adjusted.

The content of dimethyl carbonate in the aprotic organic solvent is more preferably 60 vol% or more and 85 vol% or less. If the content of dimethyl carbonate in the aprotic organic solvent is 60 vol% or more and 85 vol% or less, diethyl carbonate is more difficult to generate in the dope solution even if the pre-doping is performed for a long time, and the mass of the dope solution that remains in the doped electrode 1A is easily adjusted.

A content of ethyl methyl carbonate in the aprotic organic solvent is preferably 0 vol% or more and 30 vol% or less. If the content of ethyl methyl carbonate in the aprotic organic solvent is 0 vol% or more and 30 vol% or less, efficiency of the pre-doping can be increased even if the pre-doping is performed for a long time in a condition where the electric potential of the electrode 1 is 0 V or less, and diethyl carbonate is difficult to generate in the dope solution.

The reason for this is presumed to be that limiting the content of dimethyl carbonate in the aprotic organic solvent to the aforementioned range and the content of ethyl methyl carbonate to 0 vol% or more and 30 vol% or less inhibits reaction between the components of the solvent even in the condition where the electric potential of the electrode 1 is 0 V or less. Examples of the reaction between the components of the solvent may include a transesterification reaction.

The content of ethyl methyl carbonate in the aprotic organic solvent is more preferably 0 vol% or more and 20 vol% or less, and particularly preferably 0 vol% or more and 8 vol% or less. If the content of dimethyl carbonate in the aprotic organic solvent is in the aforementioned range, efficiency of the pre-doping is more increased even if the pre-doping is performed for a long time, and diethyl carbonate is further difficult to generate in the dope solution.

A content of cyclic carbonate in the aprotic organic solvent is preferably 5 vol% or more and 40 vol% or less. If the content of cyclic carbonate in the aprotic organic solvent is 5 vol% or more and 40 vol% or less, resistance of the dope solution is lowered, and by-products such as diethyl carbonate and carbonate-based oligomer is difficult to generate in the dope solution even if the pre-doping is performed for a long time.

The alkali metal ions contained in the dope solution are ions that make up an alkali metal salt. The alkali metal salt is preferably a lithium salt or a sodium salt. Examples of an anionic moiety that makes up the alkali metal salt may include a phosphorous anion having a fluoro group such as $PF_6^-$, $PF_3(C_2F_5)_3^-$, and $PF_3(CF_3)_3^-$; a boron anion having a fluoro group or a cyano group such as $BF_4^-$, $BF_2(CF)_2^-$, $BF_3(CF_3)^-$, and $B(CN)_4^-$; a sulfonyl imide anion having a fluoro group such as $N(FSO_2)_2^-$, $N(CF_3SO_2)_2^-$, and $N(C_2F_5SO_2)_2^-$; and an organic sulfonic acid anion having a fluoro group such as $CF_3SO_3^-$.

A concentration of the alkali metal salt in the dope solution is preferably 0.1 mol/L or more, and more preferably in a range of 0.5 to 1.5 mol /L. If the concentration of the alkali metal salt is in the above range, alkali metal pre-doping efficiently progresses.

The dope solution may further contain an additive such as vinylene carbonate, vinyl ethylene carbonate, 1-fluoroethylene carbonate, 1-(trifluoromethyl) ethylene carbonate, succinic anhydride, maleic anhydride, propane sultone, and diethyl sulfone.

The dope solution may further contain a flame retardant such as a phosphazene compound. From a viewpoint of effectively controlling a thermal runaway reaction when doping with the alkali metal, an amount of addition of the flame retardant is preferably 1 part by mass or more, and more preferably 3 parts by mass or more, and still more preferably 5 parts by mass or more, with respect to 100 parts by mass of the dope solution. From a viewpoint of obtaining a high-quality doped electrode, an amount of addition of the flame retardant is preferably 20 parts by mass or less, more preferably 15 parts by mass or less, and still more preferably 10 parts by mass or less, with respect to 100 parts by mass of the dope solution.

4. Method for Manufacturing Doped Electrode 1A Using Electrode Manufacturing System 11

A method for manufacturing the doped electrode 1A is as follows. The electrode 1 before the pre-doping is wound around the supply roll 101. Then, the electrode 1 before the pre-doping is drawn out from the supply roll 101, and conveyed to the winding roll 103 along the aforementioned path. Then, the electrolyte solution treatment tank 15, the doping tanks 17, 19, 21, and the cleaning tanks 23A, 23B, 23C are raised and set in fixed positions shown in FIG. 3.

The dope solution is stored in the electrolyte solution treatment tank 15 and the doping tanks 17, 19, 21. The dope solution is a solution described in the above "3. Composition of Dope Solution". When the carrying-out-cleaning path is selected as a conveying path, a cleaning solution is stored in the cleaning tanks 23A, 23B, 23C.

Then, the electrode 1 is conveyed along the aforementioned path from the supply roll 101 to the winding roll 103 by the group of conveyor rollers. The path on which the electrode 1 is conveyed is a path that passes through the doping tanks 17, 19, 21. When the electrode 1 passes through the doping tanks 17, 19, 21, the active material contained in the active material layer 5 is pre-doped with the alkali metal.

When the carrying-out-cleaning path is selected as the conveying path, the group of conveyor rollers convey the electrode 1 to one or more of the cleaning tanks 23A, 23B, 23C. While being conveyed by the group of conveyor rollers, the electrode 1 is cleaned in one or more of the cleaning tanks 23A, 23B, 23C.

The group of conveyor rollers continuously convey the electrode 1 to the tab cleaner 117. A part of the electrode 1 conveyed to the tab cleaner 117 has been subjected to the pre-doping process and turned to be the doped electrode 1A. The tab cleaner 117 cleans the active material layer unformed portion 7 of the doped electrode 1A.

The doped electrode 1A may be a positive electrode or a negative electrode. In a case of manufacturing the positive electrode, the positive electrode active material is doped with the alkali metal in the electrode manufacturing system 11. In a case of manufacturing the negative electrode, the negative electrode active material is doped with the alkali metal in the electrode manufacturing system 11.

In a case where lithium is occluded in the negative electrode active material of a lithium ion capacitor, a doping amount of the alkali metal is preferably 70 to 95% with respect to a theoretical capacity of the negative electrode active material. In a case where lithium is occluded in the negative electrode active material of a lithium-ion rechargeable battery, the doping amount of the alkali metal is preferably 10 to 30% with respect to the theoretical capacity of the negative electrode active material.

5. Method for Manufacturing Rechargeable Battery

The rechargeable battery is, for example, a lithium-ion rechargeable battery, and the like. The rechargeable battery includes an electrode cell. The electrode cell has a configuration in which a negative electrode and a positive electrode are stacked. In the rechargeable battery, for example, the negative electrode is manufactured by the above "4. Method for Manufacturing Doped Electrode 1A by Using Electrode Manufacturing System 11". Then, the negative electrode and the positive electrode are stacked to form the electrode cell.

6. Effect Exerted by Method for Manufacturing Doped Electrode

(6-1) In the method for manufacturing a doped electrode of the present disclosure, the content of dimethyl carbonate in the aprotic organic solvent contained in the dope solution may be 40 vol% or more and 95 vol% or less. In this case, generation of by-products in the dope solution during the pre-doping can be inhibited. In addition, the mass of the dope solution that remains in the doped electrode 1A is easily adjusted.

In the method for manufacturing a doped electrode of the present disclosure, the content of dimethyl carbonate in the aprotic organic solvent contained in the dope solution may be 60 vol% or more and 85 vol% or less. In this case, generation of by-products in the dope solution during the pre-doping can be further inhibited. In addition, the mass of the dope solution that remains in the doped electrode 1A is more easily adjusted.

(6-2) In the method for manufacturing a doped electrode of the present disclosure, the content of cyclic carbonate in the aprotic organic solvent contained in the dope solution may be 5 vol% or more and 40 vol% or less. In this case, since the resistance of the dope solution is lowered, generation of by-products in the dope solution during the pre-doping can be inhibited.

(6-3) In the method for manufacturing a doped electrode of the present disclosure, the electrode 1 is drawn out from the supply roll 101, conveyed along the path, and wound around the winding roll 103. In addition, in the method for manufacturing a doped electrode of the present disclosure, while the electrode 1 is continuously conveyed, the counter electrode units 137, 139, 141, 143 and the electrode 1 are electrically connected via the dope solution in the doping tanks 17, 19, 21. Accordingly, the method for manufacturing a doped electrode of the present disclosure has excellent productivity.

(6-4) In the method for manufacturing a doped electrode of the present disclosure, when electrically connecting the counter electrode units 137, 139, 141, 143 and the electrode 1 via the dope solution in the doping tanks 17, 19, 21, the electric potential of the electrode 1 may be -10 V or more and 0 V or less.

If the electric potential of the electrode 1 is in the aforementioned range, a high current can be applied to the electrode 1. Therefore, productivity of the doped electrode 1A can be increased.

The condition where the electric potential of the electrode 1 is continuously 0 V or less for a long time is the strong reducing atmosphere condition. The strong reducing atmosphere condition cannot occur in a typical power storage device. If the strong reducing atmosphere condition occurs in a typical power storage device, by-products such as diethyl carbonate seem more likely to be generated.

The reference lithium metal electrode 505 is installed in a portion other than a space where the counter electrode units 137, 139, 141, 143 and the electrode 1 face each other, the portion being within a distance of 7 mm from the electrode 1.

(6-5) If the omitting-cleaning path is selected as the conveying path of the electrode 1, the doped electrode 1A to which the dope solution adheres can be dried in the long-distance drying path KL or the short-distance drying path KS. Drying means removal of the solvent of the dope solution. The doped electrode 1A after the drying preferably includes 5 parts by mass or more and 40 parts by mass or less of the residual component with respect to 100 parts by mass of the active material layer 5. Use of the doped electrode 1A including 5 parts by mass or more and 40 parts by mass or less of the residual component with respect to 100 parts by mass of the active material layer 5 allows manufacturing of a rechargeable battery with high battery stability.

The doped electrode 1A after the drying preferably includes 10 parts by mass or more and 30 parts by mass or less of the residual component with respect to 100 parts by mass of the active material layer 5, and particularly preferably includes 115 parts by mass or more and 25 parts by mass or less of the residual component with respect to 100 parts by mass of the active material layer 5.

In a case where the doped electrode 1A after the drying includes 10 parts by mass or more and 30 parts by mass or less of the residual component with respect to 100 parts by mass of the active material layer 5, a rechargeable battery with higher battery stability can be manufactured. In a case where the doped electrode 1A after the drying includes a 15 parts by mass or more and 25 parts by mass or less of the residual component with respect to 100 parts by mass of the active material layer 5, a rechargeable battery with particularly high battery stability can be manufactured.

If the omitting-cleaning path is selected as the conveying path of the electrode 1, the process of cleaning the doped electrode 1A is not necessary. Therefore, productivity of the doped electrode 1A is high.

Even if the carrying-out-cleaning path is selected as the conveying path of the electrode 1, productivity of the doped electrode 1A is high if any of the cleaning tanks 23A, 23B, 23C is not used, as compared to a case where all of the cleaning tanks 23A, 23B, 23C are used.

The doped electrode 1A including the residual component can be manufactured by an electrode manufacturing system that is not provided with a cleaning mechanism such as the cleaning tanks 23A, 23B, 23C. Accordingly, the electrode manufacturing system can be downsized.

## 7. Embodiments

(Example 1)

(i) Manufacture of Electrode 1

A long strip-shaped current collector 3 was prepared. The current collector 3 was a negative electrode current collector. The size of the current collector 3 was 130 mm in width, 500 m in length, and 8 $\mu$m in thickness. The surface roughness Ra of the current collector 3 was 0.1 $\mu$m. The current collector 3 was made from copper foil. The active material layer 5 was formed on both sides of the current collector 3. The active material layer 5 was a negative electrode active material layer.

The amount of application of the active material layer 5 on one side of the current collector 3 was 25 g/m$^2$. As shown in FIG. 1, the active material layer 5 was formed along a longitudinal direction of the current collector 3. The active material layer 5 was formed over a width of 120 mm from an end portion of the current collector 3 in the width direction W. The width of the active material layer unformed portion 7 on the other end portion of the current collector 3 in the width direction W was 10 mm. The active material layer unformed portion 7 is a portion where the active material layer 5 is not formed. Then, drying was performed to obtain the electrode 1.

The active material layer 5 contained the negative electrode active material, carboxymethyl cellulose, acetylene black, a binder and a dispersant with a mass ratio of 88:3:5:3:1. The negative electrode active material was a graphite-based active material. The acetylene black corresponds to a conductive agent.

(ii) Manufacture of Counter Electrode Units 137, 139, 141, 143

The counter electrode unit 137 shown in FIG. 5 was manufactured. The size of the copper plate 407 was 100 mm in length, 220 mm in width, and 3 mm in thickness. The lithium plate 409 was mounted on the copper plate 407. The size of the lithium plate 409 was 810 mm in length, 120 mm in width, and 2 mm in thickness. The lithium plate 409 was pressure-bonded to the copper plate 407 by using a roll press device to obtain the counter electrode unit 137. A linear pressure in the pressure bonding was 5 kgf/cm. In a similar manner, the counter electrode units 139, 141, 143 were obtained.

(iii) Manufacture of Doped Electrode 1A

The electrode manufacturing system 11 shown in FIG. 3 was prepared, and the electrode 1 was fed therethrough. The counter electrode units 137, 139, 141, 143 were disposed in each of the doping tanks 17, 19, 21. Then, a dope solution was supplied into the doping tanks 17, 19, 21. The dope solution was a solution that includes 1.4 M of LiPF$_6$. The solvent of the dope solution was an aprotic organic solvent. The dope solution did not include solvents other than the aprotic organic solvent.

The aprotic organic solvent was a mixed solution of EC (ethylene carbonate), EMC (ethyl methyl carbonate) and DMC (dimethyl carbonate) with a volume ratio of 30:5:65. Specifically, when the total volume of solvent contained in the dope solution was 100, the volume ratio of EC was 30, the volume ratio of EMC was 5, and the volume ratio of DMC was 65.

The doping tanks 17, 19, 21 were in a state where the dope solution and the counter electrode units 137, 139, 141, 143 were stored. The conveying path of the electrode 1 was the carrying-out-cleaning path.

Then, the electrode 1 and the counter electrode units 137, 139, 141, 143 fed through the electrode manufacturing system 11 were coupled to a direct current power source equipped with an electric current/voltage monitor. While the electrode 1 is continuously conveyed at a speed of 1.7 m/min, 46.7 A of electric current was supplied in the entire electrode manufacturing system 11. At this time, a pre-doping current density per unit area of the electrode 1 was 12.2 mA/cm$^2$. At this time, the center in the width direction W of the active material layer 5 included in the electrode 1 matched the center in the width direction W of the lithium plate 409 included in the counter electrode units 137, 139, 141, 143.

The doped electrode 1A, after passing through the doping tank 21, was cleaned in the cleaning tanks 23A, 23B, 23C, and proceeded to the tab cleaner 117. The doped electrode 1A, after passing through the tab cleaner 117, proceeded to a drying path. The doped electrode 1A was sprayed with a gas from the blowers 213 and dried in the drying path. The gas that the blowers 213 sprayed was nitrogen. An amount of gas flow by the blowers 213 was 5 L/min per blower. The number of the blowers 213 that sprayed the gas on the doped electrode 1A was six. The pre-doping was continued under these conditions for 20 hours.

Table 1 shows manufacturing conditions of the doped electrode 1A in Example 1, and Examples 2 to 8 and Comparative examples 1 to 3 to be described later. Table 1 also shows the results of evaluation for each example and comparative example. "Yes" in "cleaning process" in Table 1 means that the path on which the electrode 1 was conveyed is the carrying-out-cleaning path. "No" in "cleaning process" means that the path on which the electrode 1 was conveyed is the omitting-cleaning path.

[Table 1]

| | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|
| Component of solvent | EC/EMC/DMC | EC/EMC/DMC | EC/EMC/DMC | EC/EMC/DMC | EC/DMC | EC/DMC | EC/EMC/DMC | EC/EMC/DMC | EC/EMC/DMC | EC/EMC/DMC | EC/EMC/DMC |
| Composition ratio of solvent | 30/5/65 | 30/30/40 | 30/20/50 | 20/5/75 | 10/90 | 35/65 | 30/5/65 | 30/5/65 | 30/40/30 | 30/40/30 | 30/40/30 |
| Current density during doping (mA/cm³) | 12.2 | 12.2 | 12.2 | 12.2 | 12.2 | 12.2 | 12.2 | 12.2 | 12.2 | 12.2 | 1.22 |
| Doping time (h) | 20 | 20 | 20 | 20 | 20 | 20 | 40 | 20 | 20 | 40 | 20 |
| Cleaning process | Yes | Yes | Yes | Yes | Yes | Yes | Yes | No | Yes | Yes | Yes |
| Voltage after doping (V) | 4.5 | 4.7 | 4.6 | 4.5 | 4.5 | 4.5 | 4.5 | 4.5 | 4.8 | 5.0 | 0.9 |
| Negative potential (V) | -2.2 | -2.4 | -2.3 | -2.2 | -2.2 | -2.2 | -2.2 | -2.2 | -2.6 | -2.8 | 0.05 |
| DEC volume ratio (vol%) | 0 | 3 | 1 | 0 | 0 | 0 | 0 | 0 | 10 | 17 | 0 |
| Mass ratio X (%) | 1.0 | 1.0 | 1.0 | 1.0 | 1.0 | 1.0 | 1.0 | 1.0 | 1.0 | 1.0 | 1.0 |
| Li Precipitation | No | No | No | No | No | No | No | No | No | Yes | No |
| Battery stability | B | B | B | B | B | B | B | A | B | C | B |
| Productivity | B | B | B | B | B | B | B | A | B | B | C |

(iv) Measurement of Voltage after Pre-doping and Confirmation of Presence/Absence of Li Precipitation

A voltage indicated by the direct current power source equipped with an electric current/voltage monitor coupled to the counter electrode units 137, 139, 141, 143 at the end of the pre-doping (hereinafter, referred to as a voltage after the pre-doping) was 4.5 V. Li precipitation was not observed in the doped electrode 1A at the end of the pre-doping.

High voltage after the pre-doping is a cause of electrolysis of a dope solution. Accordingly, in order to inhibit electrolysis of the dope solution and produce the doped electrode 1A with high quality, it is desirable that the voltage after the pre-doping is low.

(v) Measurement of Negative Electrode Potential based on Reference Lithium Metal Electrode

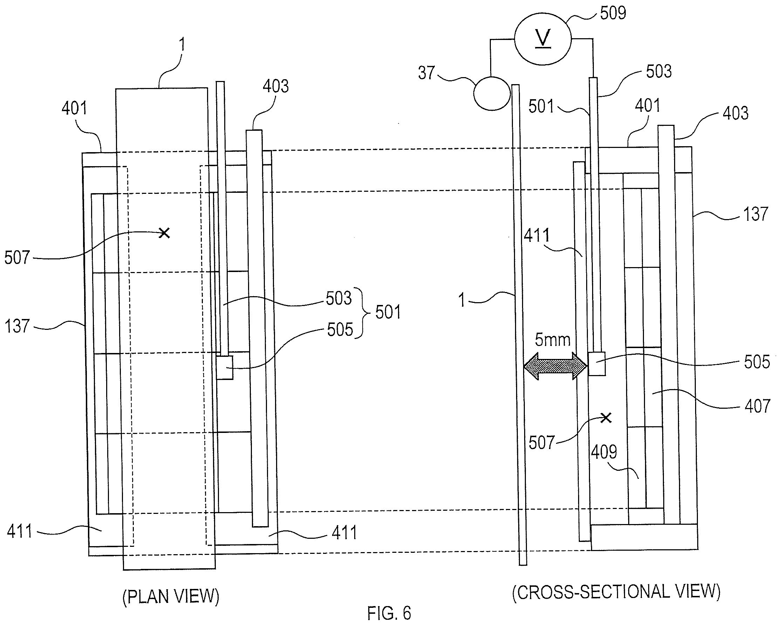

Before starting the pre-doping, a reference electrode unit 501 was mounted in the doping tank 17, as shown in FIG. 6. The reference electrode unit 501 included a tab lead 503 made of nickel and a reference lithium metal electrode 505. The reference lithium metal electrode 505 was attached to an end portion of the tab lead 503. The reference lithium metal electrode 505 has a plate-like shape having a length of 4 mm, a width of 4 mm, and a thickness of 150 μm.

The reference lithium metal electrode 505 was located at a position other than a space 507 where the counter electrode unit 137 and the electrode 1 faced each other. The space 507 is a space that overlaps with the lithium plate 409 and the electrode 1 in a plan view of FIG. 6, and that is located between the lithium plate 409 and the electrode 1 in a cross-sectional view of FIG. 6. The reference lithium metal electrode 505 was located at a distance of 5 mm from the electrode 1.

One terminal of a voltmeter 509 was coupled to an end portion of the tab lead 503 opposite to the reference lithium metal electrode 505, and the other terminal of the voltmeter was coupled to the conveyor roller 37. The conveyor roller 37 is an electrically conductive electric power supply roller as mentioned above. A potential of the conveyor roller 37 based on the reference lithium metal electrode 505 was measured by the voltmeter. Since the potential of the conveyor roller 37 is equal to the electric potential of the electrode 1, the measured potential is the electric potential of the electrode 1 based on the reference lithium metal electrode 505 (hereinafter, referred to as a negative electrode potential). The negative electrode potential was -2.2 V.

(Vi) Measurement of DEC volume ratio

After 20 hours of the pre-doping, a volume ratio of diethyl carbonate (hereinafter, referred to as a DEC volume ratio) in the solvent contained in the dope solution was measured. The measurement was made as below.

After 20 hours of the pre-doping, the dope solution was taken out from the doping tank 17. The dope solution was diluted by 100 times with acetone. Then, the diluted dope solution was subjected to a gas-chromatographic analysis.

A calibration curve that shows a relationship between the result of the gas-chromatographic analysis and the DEC volume ratio was prepared in advance by performing the gas-chromatographic analysis on a mixed solvent at a known diethyl carbonate volume ratio. The DEC volume ratio was obtained by applying the result of the gas-chromatographic analysis of the diluted dope solution to the calibration curve. Detailed conditions for the gas-chromatographic analysis were as below.

Device: Agilent 7890B
Column: VF-5 ms, length 30 m×inner diameter 0.25 mm×film thickness 1 $\mu$m
Inlet temperature: 250°C
Split ratio: 20:1
Sample injection quantity: 1 $\mu$L
Column temperature: 40°C×3 minitues → temperature elevation rate 20°C/min → 280°C×1 minute
Carrier gas: He
Linear velocity: 46 cm/sec

The DEC volume ratio was 0 vol%. Long-time pre-doping may generate by-products due to electrolysis of the dope solution. Diethyl carbonate may be a main example of the by-products. Generation of many by-products increases an electrical resistance of the dope solution, and can be a cause of an increase in the voltage after the pre-doping.

(vii) Calculation of Mass Ratio X

A mass ratio X was calculated in the obtained doped electrode 1A. The mass ratio X (%) is a value calculated by a formula 1 as follows:

$$\text{(Formula 1)} \quad X=(a/b)\times100$$

where a indicates the basis weight of the solvent, which is expressed in the unit of g/cm$^2$, and b indicates a basis weight of the active material layer, which is expressed in the unit of g/cm$^2$.

The basis weight a of the solvent is calculated as below. A sample having a diameter of 16 mm was punched out from the doped electrode 1A by using a handheld punch manufactured by Nogamigiken Co., Ltd. An initial mass wa1 of the sample was measured by using an electronic analytical scale. Then, the sample was sufficiently cleaned with a DMC solvent and dried. A mass wa2 of the dried sample was measured by using the electronic analytical scale. The unit of wa1 and wa2 is g. The basis weight a of the solvent was calculated by a formula 2 as follows:

$$\text{(Formula 2)} \quad a=(wa1-wa2)/S$$

where S indicates an area of the sample having a diameter of 16 mm, which is expressed in the unit of cm$^2$.

The basis weight b of the active material layer is calculated by a formula 3 as follows:

$$\text{(Formula 3)} \quad b=(wa2-wa3)/S$$

where wa3 indicates a mass of the sample having a diameter of 16 mm punched out from the current collector 3, which is expressed in the unit of g.

The mass ratio X in the doped electrode 1A was 1%. The mass of the residual component is approximately equal to a mass of the basis weight a of the solvent. Accordingly, the mass ratio X represents a ratio of the mass of the residual component to a mass of the active material layer 5. Specifically, the obtained doped electrode 1A contains the component of the dope solution in parts by mass of the numerical value of the mass ratio X with respect to 100 parts by mass of the active material layer 5.

(viii) Evaluation of Battery Stability

Battery stability of the doped electrode 1A was evaluated by the following method. A part of the doped electrode 1A was punched out with a Thomson blade of Takahashi Keisei Corporation. The portion punched out was prepared as a negative electrode. The basic form of the negative electrode was a rectangle 2.6 cm long and 4.0 cm wide. The negative electrode included a terminal weld part that protruded outward from one side of the rectangle. The negative electrode was exposed to an environment with a dew point of -45°C in a glove box for five hours.

Then, the negative electrode was brought into a dry room with a dew point of -60°C. A half cell for evaluation was prepared by using the negative electrode in the dry room. A method for preparing the half cell for evaluation was described as below.

A separator, a counter electrode, and a separator were stacked in this order on one side of the negative electrode. On the other side of the negative electrode as well, a separator, a counter electrode, and a separator were stacked in this order. As a result, a stacked body was obtained. The separator was made of a polyethylene non-woven cloth having a thickness of 35 $\mu$m. The counter electrode was made by attaching metal lithium to an expanded copper foil. The basic form of the expanded copper foil was a rectangle 2.6 cm long and 3.9 cm wide. The expanded copper foil included a terminal weld part that protruded outward from one side of the rectangle.

Then, four sides of the stacked body were taped. The terminal weld part of the negative electrode and the terminal weld part of the counter electrode were ultrasonic-welded to a terminal made of copper. The size of the terminal was 5 mm in width, 50 mm in length, and 0.2 mm in thickness.

Then, the stacked body was interposed between two laminate films. The laminate film had a rectangular shape. The size of the laminate film was 6.5 cm long and 8.0 cm width. Three of four sides of one of the two laminate films and three of four sides of the other of the two laminate films were fusion-bonded to each other. As a result, the two laminate films formed a bag with only one side open. The stacked body was stored inside the bag.

Then, the stacked body in the bag was vacuum-impregnated with an electrolyte solution. The electrolyte solution contained 1.2 M of $LiPF_6$. A solvent contained in the electrolyte solution was a mixed solution containing EC (ethylene carbonate) and DMC (dimethyl carbonate) at a volume ratio of 3:7.

Then, the remaining one side of the four sides of the bag, which had not been fusion-bonded, was fusion-bonded under a reduced pressure of -80kPa. The half cell for evaluation was completed in accordance with the aforementioned process.

The half cell for evaluation was introduced into a constant temperature tank having a temperature of 25°C. Then, a negative electrode dope capacity rate E, represented by a formula (4) below and expressed in the unit of %, was calculated:

$$\text{(Formula 4) } E = (C1/C2) \times 100$$

where C1 indicates an initial discharge capacity, and C2 indicates a second discharge capacity. C1 and C2 are expressed in the unit of $mAh/cm^2$. The initial discharge capacity C1 is a capacity available when the half cell for evaluation after assembled was discharged at a constant current of 10 mA until a cell voltage reached 2.0 V. This discharging is hereinafter referred to as the initial discharging. The second discharge capacity C2 is a discharge capacity available when the half cell for evaluation, after the initial discharging, was charged at the constant current of 10 mA until the cell voltage reached 0.01 V, and then was discharged at the constant current of 10 mA until the cell voltage reached 2.0 V.

Based on a value of the negative electrode dope capacity rate E in the half cell for evaluation, the battery stability was evaluated in accordance with the following criteria.

(Evaluation Criteria for Battery Stability)

A: The negative electrode dope capacity rate E is 82% or more.
B: The negative electrode dope capacity rate E is 80% or more and less than 82%.
C: The negative electrode dope capacity rate E is less than 80%.

The negative electrode dope capacity rate E of the half cell for evaluation was 81%. According to the aforementioned criteria, the result of evaluation on the battery stability in Example 1 was B.

(ix) Evaluation of Productivity

A time period from when the electrode 1 starts being drawn from the supply roll 101 until the doped electrode 1A is wound around the winding roll 103 is defined as operation time T. An operation time ratio TR, represented by a formula 5 below and expressed in the unit of % was calculated:

$$\text{(Formula 5) } TR = (T/Tr1) \times 100$$

where Tr1 indicates the operation time T in Example 1. Based on a value of the operation time ratio TR, the productivity was evaluated in accordance with the following criteria.

(Evaluation Criteria of Productivity)

A: The operation time ratio TR is less than 80%.
B: The operation time ratio TR is 80% or more and less than 110%.
C: The operation time ratio TR is 110% or more.

(Example 2)

The doped electrode 1A was produced basically in a similar manner as in Example 1, and evaluated. The solvent contained in the dope solution was a mixed solution of EC, EMC and DMC with a volume ratio of 30:30:40.

In Example 2, a voltage after the doping was 4.7 V. The negative electrode potential was -2.4 V. Li precipitation was not observed on the doped electrode 1A. The DEC volume ratio was 3 voL%. The mass ratio X was 1.0%. The result of evaluation on the battery stability was B. The result of evaluation on the productivity was B.

In Example 2, the volume ratio of EMC in the solvent contained in the dope solution was greater than that of Example 1. Therefore, the DEC volume ratio was greater and the voltage after the doping was higher than those of Example 1.

(Example 3)

The doped electrode 1A was produced basically in a similar manner as in Example 1, and evaluated. The solvent contained in the dope solution was a mixed solution of EC, EMC and DMC with a volume ratio of 30:20:50.

In Example 3, the voltage after the doping was 4.6 V. The negative electrode potential was -2.3 V. Li precipitation was not observed on the doped electrode 1A. The DEC volume ratio was 1 voL%. The mass ratio X was 1.0%. The result of evaluation on the battery stability was B. The result of evaluation on the productivity was B.

In Example 3, the volume ratio of EMC in the solvent of the dope solution was 50%. Therefore, a small amount of diethyl carbonate was generated in the dope solution, and the voltage after the doping was slightly higher than that of Example 1.

(Example 4)

The doped electrode 1A was produced basically in a similar manner as in Example 1, and evaluated. The solvent contained in the dope solution was a mixed solution of EC, EMC and DMC with a volume ratio of 20:5:75.
In Example 4, the voltage after the doping was 4.5 V. The negative electrode potential was -2.2 V. Li precipitation was not observed on the doped electrode 1A. The DEC volume ratio was 0 voL%. The mass ratio X was 1.0%. The result of evaluation on the battery stability was B. The result of evaluation on the productivity was B.

(Example 5)

The doped electrode 1A was produced basically in a similar manner as in Example 1, and evaluated. The solvent contained in the dope solution was a mixed solution of EC and DMC with a volume ratio of 10:90.
In Example 5, the voltage after the doping was 4.5 V. The negative electrode potential was -2.2 V. Li precipitation was not observed on the doped electrode 1A. The DEC volume ratio was 0 voL%. The mass ratio X was 1.0%. The result of evaluation on the battery stability was B. The result of evaluation on the productivity was B.

(Example 6)

The doped electrode 1A was produced basically in a similar manner as in Example 1, and evaluated. The solvent contained in the dope solution was a mixed solution of EC and DMC with a volume ratio of 35:65.
In Example 6, the voltage after the doping was 4.5 V. The negative electrode potential was -2.2 V. Li precipitation was not observed on the doped electrode 1A. The DEC volume ratio was 0 voL%. The mass ratio X was 1.0%. The result of evaluation on the battery stability was B. The result of evaluation on the productivity was B.

(Example 7)

The doped electrode 1A was produced basically in a similar manner as in Example 1, and evaluated. Pre-doping time continued for 40 hours.
In Example 7, the voltage after the doping was 4.5 V. The negative electrode potential was -2.2 V. Li precipitation was not observed on the doped electrode 1A. The DEC volume ratio was 0 voL%. The mass ratio X was 1.0%. The result of evaluation on the battery stability was B. The result of evaluation on the productivity was B.
When the solvent contained in the dope solution was the solvent in Examples 1 and 7, the voltage after the doping did not increase as compared to the case of Example 1 even if the pre-doping time was longer than that of Example 1.

(Example 8)

The doped electrode 1A was produced basically in a similar manner as in Example 1, and evaluated. The conveying path of the electrode 1 was the omitting-cleaning path.
In Example 8, the voltage after the doping was 4.5 V. The negative electrode potential was -2.2 V. Li precipitation was not observed on the doped electrode 1A. The DEC volume ratio was 0 voL%. The mass ratio X was 10%. The result of evaluation on the battery stability was A. The result of evaluation on the productivity was A.
In Example 8, since the conveying path of the electrode 1 was the omitting-cleaning path, the mass ratio X increased, and the result of evaluation on the productivity was improved.

(Comparative example 1)

The doped electrode 1A was produced basically in a similar manner as in Example 1, and evaluated. The solvent contained in the dope solution was a mixed solution of EC, EMC and DMC with a volume ratio of 30:40:30.
In Comparative example 1, the voltage after the doping was 4.8 V. The negative electrode potential was -2.6 V. Li precipitation was not observed on the doped electrode 1A. The DEC volume ratio was 10 voL%. The mass ratio X was 1.0%. The result of evaluation on the battery stability was B. The result of evaluation on the productivity was B.
In Comparative example 1, a content of DMC was low in the solvent contained in the dope solution. Accordingly, the DEC volume ratio was large, and the voltage after the doping was high.

(Comparative example 2)

The doped electrode 1A was produced basically in a similar manner as in Example 1, and evaluated. The solvent contained in the dope solution was a mixed solution of EC, EMC and DMC with a volume ratio of 30:40:30. The pre-doping time continued for 40 hours.
In Comparative example 2, the voltage after the doping was 5.0 V. The negative electrode potential was -2.8 V. Li precipitation was observed on the doped electrode 1A. The DEC volume ratio was 17 voL%. The mass ratio X was 1.0%. The result of evaluation on the battery stability was C. The result of evaluation on the productivity was B.

In Comparative example 2, a ratio of DMC was low in the solvent contained in the dope solution. In addition, the pre-doping time was long. Therefore, Li was precipitated on the doped electrode 1A. The result of evaluation on the battery stability was bad.

(Comparative example 3)

The doped electrode 1A was produced basically in a similar manner as in Example 1, and evaluated. The solvent contained in the dope solution was a mixed solution of EC, EMC and DMC with a volume ratio of 30:40:30. A device current value and a conveying speed were adjusted so that a current density was 1.22 mA/cm² without decreasing the mass ratio X as compared to that of Example 1.

In Comparative example 3, the voltage after the doping was 0.9 V. The negative electrode potential was 0.05 V. Li precipitation was not observed on the doped electrode 1A. The DEC volume ratio was 0 voL%. The mass ratio X was 1.0%. The result of evaluation on the battery stability was B. The result of evaluation on the productivity was C.

In Comparative example 3, by decreasing the current density, the negative electrode potential became a positive value, and reducibility to the electrolyte solution was reduced. Although no increase in the DEC ratio was observed, the result of evaluation on the productivity was significantly inferior.

<Other Embodiments>

Although the embodiments of the present disclosure have been explained hereinbefore, implementation of the present disclosure should not be limited to the aforementioned embodiments and may be modified in various modes.

(1) Functions of one element in each of the aforementioned embodiments may be performed by two or more elements. Functions of two or more elements may be performed by one element. A part of configurations of each of the aforementioned embodiments may be omitted. At least a part of the configurations of each of the aforementioned embodiments may be added to or replaced with a different configuration of the aforementioned embodiments.
(2) Aside from the aforementioned method for manufacturing a doped electrode, the present disclosure may also be implemented in various forms such as a system for manufacturing a doped electrode, a doped electrode, a rechargeable battery, and a method for manufacturing a rechargeable battery.

**Claims**

1. A method for manufacturing a doped electrode including an active material layer doped with an alkali metal, the method comprising:

conveying a strip-shaped electrode including an active material layer along a path that passes through a doping tank storing a dope solution containing ions of the alkali metal and an aprotic organic solvent, and a counter electrode unit; and
electrically connecting the counter electrode unit and the strip-shaped electrode including the active material layer via the dope solution in the doping tank,
a content of dimethyl carbonate in the aprotic organic solvent being 40 vol% or more and 95 vol% or less.

2. The method for manufacturing a doped electrode according to claim 1, wherein a content of cyclic carbonate in the aprotic organic solvent is 5 vol% or more and 40 vol% or less.

3. The method for manufacturing a doped electrode according to claim 1 or 2, wherein

the strip-shaped electrode including the active material layer is drawn from a supply roll, conveyed along the path, and wound around a winding roll, and
the counter electrode unit and the strip-shaped electrode including the active material layer are electrically connected via the dope solution in the doping tank while the strip-shaped electrode including the active material layer is continuously conveyed.

4. The method for manufacturing a doped electrode according to any one of claims 1 to 3, wherein

when the counter electrode unit and the strip-shaped electrode including the active material layer are electrically connected via the dope solution in the doping tank, a potential of the strip-shaped electrode including the active material layer based on a reference lithium metal electrode is -10 V or more and 0 V or less, and
the reference lithium metal electrode is installed in a portion other than a space where the counter electrode unit and the strip-shaped electrode including the active material layer face each other, the portion being within a distance of 7 mm from the strip-shaped electrode including the active material layer.

5. The method for manufacturing a doped electrode according to any one of claims 1 to 4, wherein a content of dimethyl carbonate in the aprotic organic solvent is 60 vol% or more and 85 vol% or less.

6. The method for manufacturing a doped electrode according to any one of claims 1 to 5, wherein the doped electrode that exits the doping tank is dried so as to include 5 parts by mass or more and 40 parts by mass or less of a component of the dope solution with respect to 100 parts by mass of the active material layer.

FIG. 1

1

7 6

5

3 ⊙ L

5

W

FIG. 2

FIG. 3

FIG. 4

(PLAN VIEW)

(CROSS-SECTIONAL VIEW)

FIG. 5

FIG. 6

## INTERNATIONAL SEARCH REPORT

International application No.

**PCT/JP2022/013066**

### A. CLASSIFICATION OF SUBJECT MATTER

*H01M 4/139*(2010.01)i; *H01G 11/50*(2013.01)i; *H01G 11/86*(2013.01)i
FI: H01G11/50; H01M4/139; H01G11/86

According to International Patent Classification (IPC) or to both national classification and IPC

### B. FIELDS SEARCHED

Minimum documentation searched (classification system followed by classification symbols)

H01M4/139; H01G11/50; H01G11/86

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2020/152986 A1 (MUSASHI ENERGY SOLUTIONS CO., LTD.) 30 July 2020 (2020-07-30) claims, paragraphs [0024]-[0060], fig. 3 | 1, 3 |
| A | claims, paragraphs [0024]-[0060], fig. 3 | 2, 4-6 |
| Y | JP 2010-080123 A (SUMITOMO BAKELITE CO LTD) 08 April 2010 (2010-04-08) paragraph [0051] | 1, 3 |
| A | paragraph [0051] | 2, 4-6 |
| Y | WO 2012/099264 A1 (ZEON CORPORATION) 26 July 2012 (2012-07-26) paragraph [0125] | 1, 3 |
| A | paragraph [0125] | 2, 4-6 |
| A | WO 2020/170607 A1 (MUSASHI ENERGY SOLUTIONS CO., LTD.) 27 August 2020 (2020-08-27) entire text, all drawings | 1-6 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
| --- |
| **PCT/JP2022/013066** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2020/110433 A1 (MUSASHI ENERGY SOLUTIONS CO., LTD.) 04 June 2020 (2020-06-04)<br>entire text, all drawings | 1-6 |
| A | WO 2017/146223 A1 (JSR CORP) 31 August 2017 (2017-08-31)<br>entire text, all drawings | 1-6 |

Form PCT/ISA/210 (second sheet) (January 2015)

**INTERNATIONAL SEARCH REPORT**
Information on patent family members

International application No.

**PCT/JP2022/013066**

| Patent document cited in search report | | | Publication date (day/month/year) | Patent family member(s) | | | Publication date (day/month/year) |
|---|---|---|---|---|---|---|---|
| WO | 2020/152986 | A1 | 30 July 2020 | EP 3916851 A1 claims, paragraph [0024]-[0060], fig. 3 | | | |
| JP | 2010-080123 | A | 08 April 2010 | (Family: none) | | | |
| WO | 2012/099264 | A1 | 26 July 2012 | US 2014/0023922 A1 paragraph [0225] | | | |
| WO | 2020/170607 | A1 | 27 August 2020 | EP 3930033 A1 entire text, all drawings | | | |
| WO | 2020/110433 | A1 | 04 June 2020 | EP 3890064 A1 entire text, all drawings | | | |
| WO | 2017/146223 | A1 | 31 August 2017 | US 2019/0074143 A1 entire text, all drawings EP 3422377 A1 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021104884 A
- JP H10308212 A
- JP 2008077963 A
- JP 2012049543 A
- JP 2012049544 A
- JP 2009246137 A
- JP 2013258392 A
- JP 2005123175 A
- JP 2006107795 A